# EUROPÄISCHE PATENTANMELDUNG

(11) **EP 1 595 436 A1**
(43) Veröffentlichungstag der Anmeldung: **16.11.2005**
(21) Anmeldenummer: 05009953.0
(22) Anmeldetag: 06.05.2005
(51) Int. Cl.: A01D 90/04

(54) **Erntenmaschine mit einer Aufnahmevorrichtung für landwirtschaftliches Erntegut**

(30) Priorität: 11.05.2004 DE 102004023747
(71) Anmelder: Maschinenfabrik Bernard Krone GmbH, 48480 Spelle (DE)
(72) Erfinder: Krone, Bernard, Dr.-Ing.E.h., 48480 Spelle (DE); Martensen, Klaus, Dr.-Ing., 48477 Hörstel (DE); Sand, Christian, Dipl.-Ing., 49477 Ibbenbüren (DE)

(57) **Zusammenfassung**

Erntemaschine mit einer Aufnahmevorrichtung für landwirtschaftliches Erntegut wie Heu oder Stroh oder dgl., welche eine Schneidvorrichtung umfaßt, die mit einer Messergruppe zur Zerkleinerung des Ernteguts versehen ist, wobei die über zumindest eine Schaltwelle betätigbare Messergruppe um eine Achse schwenkbar und in Eingriffsstellung in einen Förderkanal (26) der Erntemaschine (1) überführbar ausgebildet ist, wobei der Messergruppe zur Überführung in ihre Eingriffsstellung und/oder Außereingriffsstellung eine Stellvorrichtung (28) zugeordnet ist.

## Beschreibung

Die Erfindung bezieht sich auf eine Erntemaschine mit einer Aufnahmevorrichtung für landwirtschaftliches Erntegut wie beispielsweise Heu oder Stroh oder dgl. und mit einer Schneidvorrichtung mit einer Messergruppe zur Zerkleinerung des aufgenommenen Ernteguts, wobei die über zumindest eine Schaltwelle betätigbare Messergruppe um eine Achse schwenkbar und in Eingriffsstellung in einen Förderkanal der Erntemaschine überführbar ausgebildet ist.

Bekannt ist eine gattungsgemäße Maschine aus dem DE 297 12 397, die zwei Messerreihen, welche über Schaltwellen betätigbar sind, offenbart. Aufgrund der dort beschriebenen Schalthebelanordnung ist es möglich, zum einen eine Gruppenschaltung der Schneidmesser zur Veränderung der Schnittlänge des Halm- oder Blattgutes vorzunehmen, zum anderen durch einen zentralen Schaltvorgang eine Entriegelung der Schneidmesser durchzuführen. Die beschriebenen Messerreihen können entweder alleine oder zusammen in den Kanal ein- oder aus diesem herausgeschwenkt werden.

Es ist Aufgabe der vorliegenden Erfindung, eine gattungsgemäße Erntemaschine mit einer verbesserten Schneideinrichtung zu schaffen.

Die Aufgabe wird gelöst durch eine Erntemaschine der eingangs genannten Art, die eine Stellvorrichtung zum Überführen der Messergruppe in ihre Eingriffs- und/oder Außereingriffsstellungen aufweist. Eine solche Erntemaschine ist flexibel einsetzbar und erleichtert dem Bedienpersonal durch die Stellvorrichtung erheblich die Arbeit.

Je nach Ausbildung der Erntemaschine kann es sich hierbei nicht nur um ein oder zwei, sondern auch um mehr Messergruppen handeln, die von einer Stellvorrichtung geschaltet werden können, womit sich eine Vielzahl von Kombinationsmöglichkeiten zur Variation der Zerkleinerung von Erntegut ergibt.

Es muss sich bei der erfindungsgemäßen Erntemaschine nicht um eine solche handeln, die nur zum Aufnehmen von Erntegut ausgebildet ist, sondern die erfindungsgemäße Erntemaschine kann beispielsweise auch eine Vorrichtung zum Aufnehmen und Pressen von Erntegut sein.

Je nach Ausbildung der Schneidvorrichtung ist es weiterhin von Vorteil, wenn die in Messerreihen zusammenfassbaren Messergruppen unabhängig voneinander durch die Stellvorrichtung bewegbar sind, um die Anzahl der Variationsmöglichkeiten der Schneidvorrichtung weiter zu erhöhen.

Bei einer vorteilhaften Ausgestaltung einer erfindungsgemäßen Erntemaschine mit einer aus zwei Messergruppen bestehenden Messerreihe, wobei die Messergruppen jeweils eine eigene Schaltwelle aufweisen, ergeben sich mit Hilfe eines einzelnen Stellmittels somit beispielsweise vier Schaltstellungen der Schneidvorrichtung. So kann beispielsweise eine erste Messergruppe nach ihrem Abstumpfen durch eine zweite Messergruppe im Förderkanal ersetzt werden, statt dessen ist es allerdings auch denkbar, gleichzeitig beide Messergruppen, die vorzugsweise abwechselnd nebeneinander angeordnete Messer aufweisen, in den Förderkanal einzustellen, um die Schnittlängen des zu schneidenden Ernteguts zu verringern. Die Bewegung der Messergruppen in den oder aus dem Förderkanal kann mit Hilfe der Stellvorrichtung dann auf einfache Art und Weise durchgeführt werden. Auch ist es denkbar, daß die Messer bei kleineren Verstopfungen des Förderkanals zur Beseitigung dieser aus dem Förderkanal fernbedienbar ausgeschwenkt werden.

Bei einer vorteilhaften Ausgestaltung der Erfindung weist die Stellvorrichtung zumindest ein Stellmittel auf, welches formschlüssig mit den Schaltwellen der Messergruppen bewegbar ist. Somit kann die erfindungsgemäße Lösung auf bereits vorhandene technische Merkmale zurückgreifen, was eine kostengünstige Konstruktion nach sich zieht und gegebenenfalls eine Nachrüstung vorhandener Erntemaschinen erlaubt.

In einer weiteren vorteilhaften Ausgestaltung der Erfindung ist das Stellmittel als Zylinder ausgebildet, der beispielsweise mit einer Zahnstange mit zumindest zwei Zahnrädern in Eingriff gebracht werden kann. Die Zahnräder sind zumindest einer Schaltwelle zugehörig, so daß je nach Stellung der Zahnräder bezüglich der Zahnstange bei Bewegung des Zylinders und damit der Zahnstange diese die Messergruppen in eine Eingriffs- und/oder Außereingriffsstellung überführen. Dieses beinhaltet, daß die Zahnräder teilweise außer Eingriff mit der Zahnstange gebracht werden können, beispielsweise durch eine nicht vollständige Ausbildung der Zähne. Es kann sich hierbei alternativ auch um verschiebbare Zahnräder handeln, wie sie beispielsweise bei Getrieben Verwendung finden.

Von großem Vorteil für das maschinebedienende Personal ist es weiterhin, wenn die Zahnräder mittels eines Stellmittels mit der Zahnstange in bzw. außer Eingriff überführbar sind, so daß auch alle Stellfunktionen der Schneidvorrichtung von einer entfernteren Steuerposition bedienbar sind.

Weitere Vorteile und Einzelheiten der Erfindung ergeben sich aus den Unteransprüchen sowie der nachfolgenden Beschreibung der schematischen Darstellungen. In der Zeichnung zeigt:
- Fig. 1: eine erfindungsgemäße Erntemaschine in einem Längsschnitt, (ohne Darstellung der Messergruppen),
- Fig. 2: eine Seitenansicht von Schneideinrichtung und Förderkanal, die im wesentlichen den Bereich X gemäß Fig. 1 entspricht,
- Fig. 3: einen Längsschnitt durch den Gegenstand nach Fig. 2,
- Fig. 4: den Gegenstand nach Fig. 2 in einer geänderten Schaltstellung der Messergruppen,
- Fig. 5: den Gegenstand nach Fig. 4 in einem Längsschnitt,
- Fig. 6: die Stellvorrichtung der Messergruppen im Detail,
- Fig. 7: den Gegenstand nach Fig. 6 in einer geänderten Stellung.

Eine erfindungsgemäße Erntemaschine 1 zum Aufnehmen von landwirtschaftlichem Erntegut weist eine Ballenformeinrichtung 2 auf, die in einer Wickelkammer 3 befindlich ist. Die Wickelkammer 3 besitzt eine Einlassöffnung 4, durch die allgemein mit einer Aufnahmevorrichtung 6 aufgenommenes Erntegut wie beispielsweise Heu oder Anwelkgut in die Wickelkammer 3 befördert werden kann. Eine Antriebsrolle 7 unterteilt die Ballenformeinrichtung 2 in ein Lasttrum 8 und ein Leertrum 9, wobei sich das Lasttrum 8 von dem Leertrum 9 durch die Übertragung der einen Erntegutballen antreibenden Momente unterscheidet. Beiderseits der Einlassöffnung 4 angeordnete Walzen 11 begrenzen zusätzlich die Wickelkammer 3. Zu Beginn eines Ballenformvorgangs liegt das Lasttrum 8 des Wickelbodens 2 weiterhin an eine Startkammer ausbildenden Führungsvorrichtungen 12 an. Bei diesem Ausführungsbeispiel sind die Führungsvorrichtungen 12 als Umlenkrollen ausgebildet, es kann sich hierbei jedoch auch um eine oder mehrere Führungsflächen handeln.

Die Ballenformeinrichtung 2 wird mit Hilfe eines Kraftspeichers 13 des Speichers 14 unter Spannung gehalten. Dadurch liegen die zwischen der Antriebsrolle 7 und einer Umlenkrolle 16 befindlichen Abschnitte des Lasttrums 8 der Ballenformeinrichtung 2 bei Beginn des Emtegutballenformvorgangs annähernd parallel zu den Seitenkanten 17 der die Wickelkammer 3 begrenzenden Führungsseitenwände. Der Speicher 14 umfasst im wesentlichen einen mit einer Umlenkrolle 18 versehenen Spannarm 19, an den der als Federelement ausgebildete Kraftspeicher 13 angreift. Füllt sich die Wickelkammer 3, so wird von dem Erntegut ein nach außen gerichteter Druck auf das Lasttrum 8 ausgeübt und das Federelement 13 wird gestaucht. Dabei ändert sich die zwischen den Umlenkrollen 21 befindliche Länge des Wickelbodens 2 und die Erntegutballenvergrößerung geht einher mit einer Vergrößerung der Wickelkammer 3.

Der Speicher 14 weist ein mit 22 bezeichnetes Stellmittel auf, welches ein Begrenzungselement 23 und ein Widerlager 24 als gehäusefeste Abstützung umfasst.

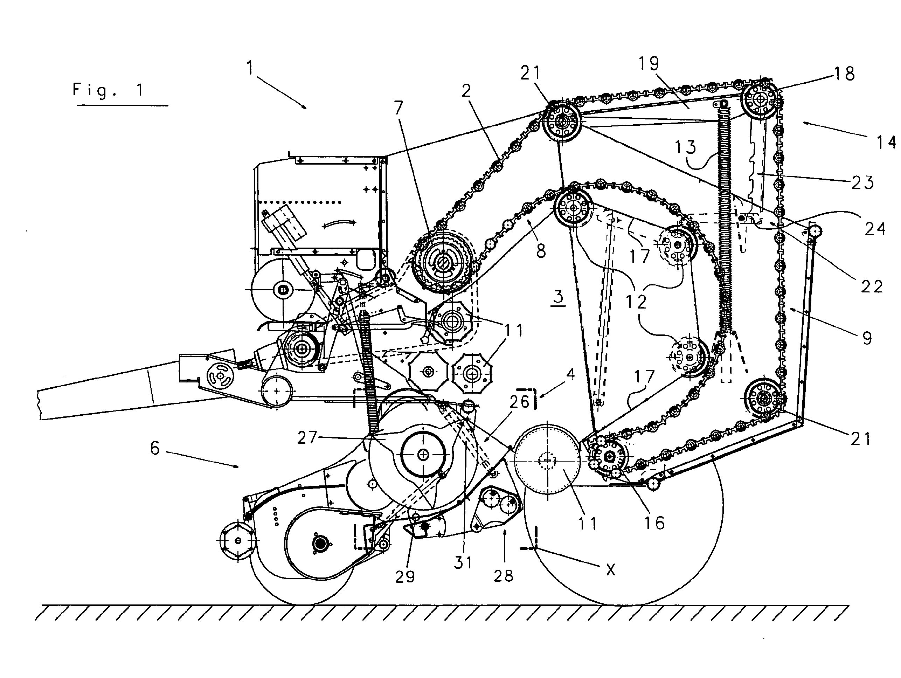

In der in Figur 1 dargestellten Wirkstellung des Stellmittels 22 greift eine Ausnehmung am unteren Ende des Begrenzungselements 23 in das Widerlager 24 ein. Hierdurch wird die weitere Freigabe von Länge der Ballenformeinrichtung 2 aus dem Speicher 14 verhindert, so daß es zur Ausbildung eines minimalen Erntegutballens kommt. Die vorher von dem Kraftspeicher 13, der hier ein Federelement ist, auf die Ballenformeinrichtung 2 ausgeübte Spannung wirkt nun nur noch zusätzlich, da das Begrenzungselement 23 die weitere Kontraktion des Kraftspeichers wie weiter unten beschrieben weitestgehend verhindert.

Bei einer geringfügig geänderten Position des Begrenzungselements 23, welches verschwenkbar bezüglich des Schwenkarms 19 ist, kann das Wiederlager 24 in Eingriff mit einem weiter oben befindlichen Bereich des Begrenzungselements 23 gelangen. Entsprechend kann der Kraftspeicher 13 weiter kontraktieren und der Speicher 14 gibt mehr Länge frei, so daß ein größerer Erntegutballen in der Wickelkammer 3 gebildet werden kann.

Nach der Aufnahme von Erntegut mit Hilfe einer nicht näher erläuterten Erntegutaufnahmevorrichtung wird das aufgenommene Material durch den Förderkanal 26 in Richtung Einlassöffnung 4 transportiert. Dieser Weitertransport wird durch die Förderzinken 27 bewirkt, die das Erntegut an einer zwei Messergruppen aufweisenden Messerreihe entlang fördern.

Der untere Teil des Förderkanals 26, der die Messergruppe und eine Stellvorrichtung 28 umfasst, ist um eine Achse 29 und mit Hilfe eines Zylinders 31 verschwenkbar. Bei Betätigung des Zylinders 31 verfährt der schwenkbare Teil aus der in Figur 1 dargestellten Eingriffstellung in eine Außereingriffstellung, woraufhin sich die in Figur 1 senkrecht zur Figurenebene erstreckende Messerreihe leicht austauschen lässt. Alternativ können die Messer auch über die geöffnete Heckklappe der Wickelkammer 3 getauscht werden.

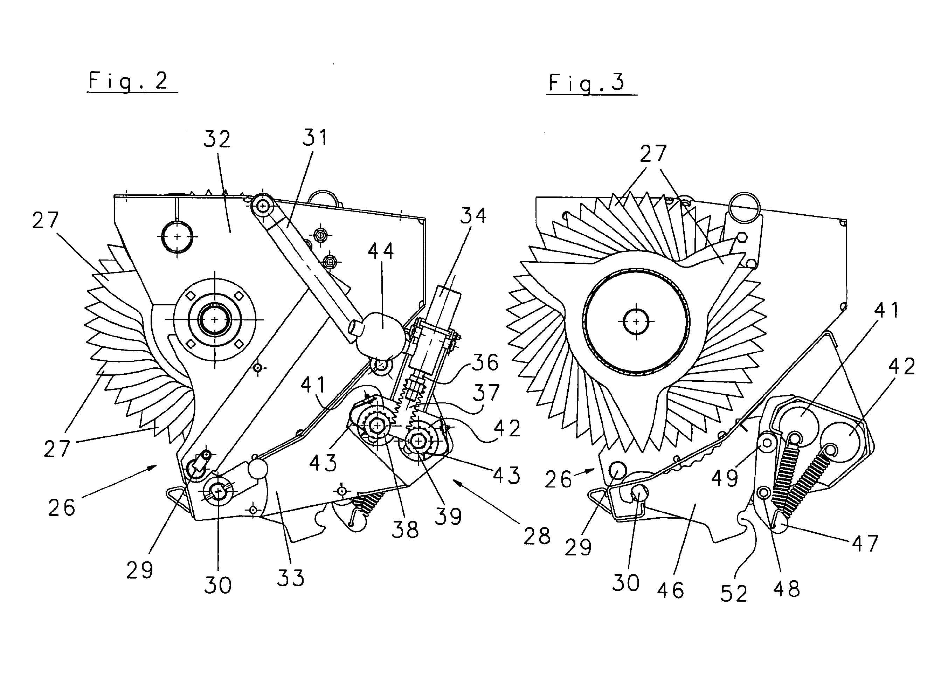

Die in Figur 2 näher dargestellte Stellvorrichtung 28 befindet sich auf zumindest einer Seite des Förderkanals 26, der hier von den Seitenteilen 32 des oberen und dem schwenkbaren Seitenteil 33 des unteren Gehäuses verdeckt wird.

Die Stellvorrichtung 28 umfasst in Figur 2 einen Zylinder 34, an dessen Kolbenstange 36 eine Zahnstange 37 befestigt ist. Diese Zahnstange 37 kann in Eingriff stehen mit zwei nicht vollständig mit Zähnen versehenen Zahnrädern 38 und 39, die wiederum jeweils einer Schaltwelle 41 und 42 zugeordnet sind. Mit Hilfe von Blattfederelementen 43, die in die Zahnräder 38 und 39 lösbar eingreifen, kann die Verdrehung der Zahnräder 38 und 39 und damit die Verdrehung der Schaltwellen 41 und 42 verhindert werden, sollte ein Zahnrad 41 und/oder ein Zahnrad 42 nicht mit der Zahnstange 37 kämmen.

Des weiteren weist die Stellvorrichtung 28 einen Druckspeicher 44 auf. Je nach Anschluss des Druckspeichers 44 auf der einen oder anderen Seite des Kolbens des Zylinders 34 füllt sich dieser Druckspeicher 44 mit einem Fluid, wenn der Zylinder in die eine oder andere Richtung verfährt. So werden z. B. die Messergruppen durch das Verfahren des Zylinders 34 in die Eingriffstellung in den Förderkanal 36 gebracht, während, wenn der Zylinder 34 drucklos geschaltet wird, der Druckspeicher 44 für die Verschwenkung der Schaltwellen 41, 42 in die Ausgangsposition verantwortlich ist.

Statt eines einfach wirkenden Zylinders mit einem Druckspeicher 44 liegt es natürlich auch im Rahmen der Erfindung, einen doppelt wirkenden Zylinder zu verwenden, was allerdings mit erhöhtem baulichen Aufwand einhergeht.

Es liegt natürlich auch im Rahmen der Erfindung, pro Schaltwelle einen einzelnen Zylinder vorzusehen, der unabhängig von den übrigen Zylindern oder auch anderen Stellmitteln betätigt werden kann, so daß sich eine Vielzahl von Variationsmöglichkeiten zur Positionierung der Messergruppen ergeben.

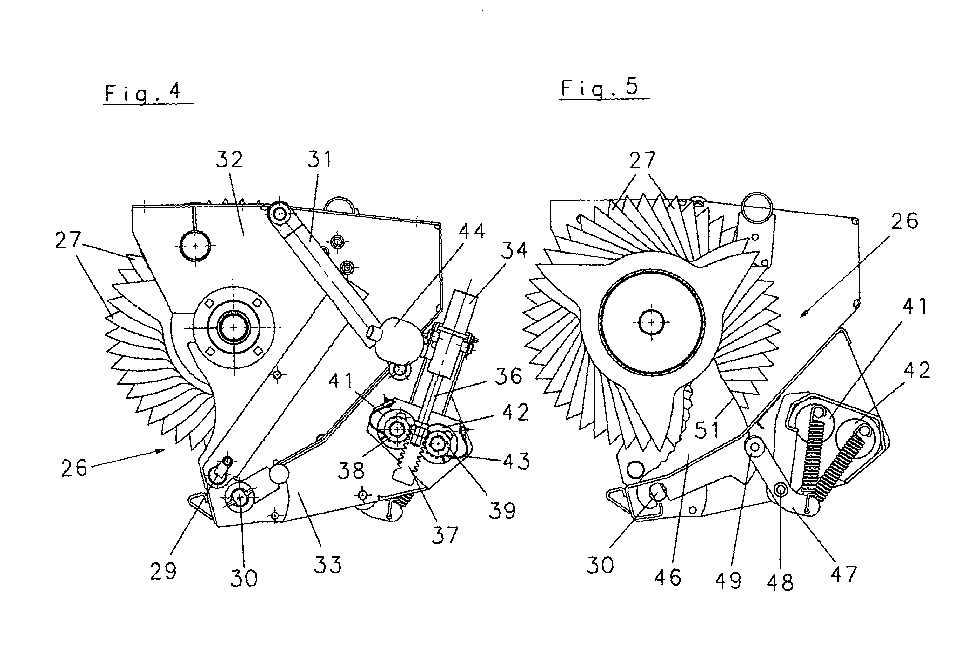

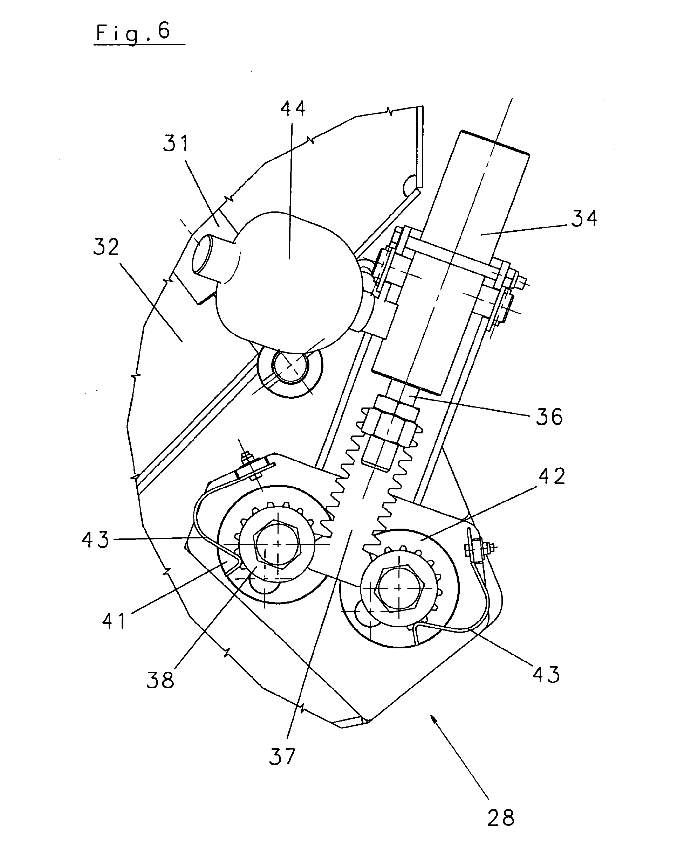

Dem in Figur 3 dargestellten Querschnitt lässt sich entnehmen, wie ein Messer 46 der Messerreihe in den Förderkanal 26 verschwenkt wird. Durch die Bewegung einer Schaltwelle 41 aus der in Figur 3 dargestellten Stellung in die in Figur 5 dargestellte Stellung wird der Messerhebel 47 um seine Schwenkachse 48 verschwenkt und fährt mit seiner Rolle 49 aus der in Figur 3 dargestellten Stellung entlang des Randes 51 des um die Achse 30 schwenkbaren Messers bis zu dessen Aufnahmemulde 52. So verschwenken alle nacheinander angeordneten Messer 46 einer Messergruppe in den Förderkanal 26.

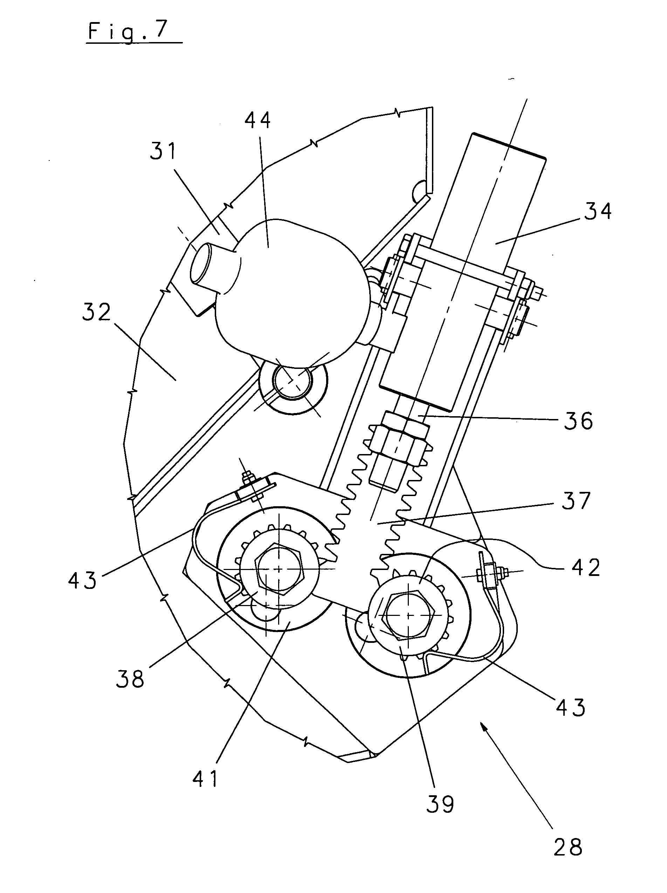

Während die Zähne des Zahnrades 38 und des Zahnrades 39 in der Figur 6 mit der Zahnstange 37 kämmen, befindet sich in der Figur 7 das Zahnrad 39 außer Eingriff mit der Zahnstange 37. Zur Verhinderung einer Weiterbewegung der mit dem Zahnrad verbundenen Schaltwelle 42 greift das Blattfederelement 43, welches gehäusefest festgelegt ist, in eine Zahnlücke des Zahnrades 39 ein und verhindert dessen weitere Bewegung.

Die Verstellung der Schaltwellen 41 und/oder 42 in die beschriebenen Stellungen kann beispielsweise mit Hilfe eines auf der Stirnseite der Wellen anzusetzenden Sechskantschlüssels durchgeführt werden. Es ist jedoch natürlich auch denkbar, statt eines einzelnen Zylinders, der beide Schaltwellen betreibt, die Schaltwellen 41 und 42 mit jeweils eigenen Zylindern zu betreiben.

Vorteilhafterweise lässt sich die Steuerung der Stellvorrichtung 28 mit Hilfe einer Steuervorrichtung von einem nicht direkt an dem Förderkanal 26 befindlichen Bereich aus vornehmen, beispielsweise aus dem Führerstand eines Schleppfahrzeugs der Erntemaschine 1. Damit wird die Bedienung der erfindungsgemäßen Vorrichtung auf jeden Fall weiter vereinfacht.

Sollte es zu einer Verstopfung des Förderkanals 6 kommen, so können wahlweise, je nach Einstellung der Schaltwellen 41 und 42, eine oder auch beide Messergruppen mit ihren abwechselnd nacheinander angeordneten Messern 46 aus dem Förderkanal 26 verfahren werden.

Aufgrund der in Figur 1 erkennbaren Teilung des Förderkanalbodens wird dieser zweigeteilt verschwenkt. Da dadurch der Förderkanalboden nicht nur um eine Achse verschwenkt wird, vergrößert sich dabei der Förderkanal/Schneidkanal 26 erheblich und Verschmutzungen und/oder Verstopfungen können bei Weiterbewegung der Förderzinken 27 automatisch aus dem Förderbereich herausbefördert werden oder bei Stillstand der Förderzinken 27 aus dem Förderkanal manuell ausgeräumt werden. Dieses ist auch vom Vorteil, sollte ein verschlissener Teil des Schneidkanalbodens ausgetauscht werden müssen. Hierbei brauchen dann jeweils nur die Teile ausgetauscht werden. Statt einer Zweiteilung kann es sich natürlich auch um eine mehrfache Teilung handeln.

## Patentansprüche

1. Erntemaschine mit einer Aufnahmevorrichtung für landwirtschaftliches Erntegut wie Heu oder Stroh oder dgl., welche eine Schneidvorrichtung umfasst, die mit einer Messergruppe zur Zerkleinerung des Ernteguts versehen ist, wobei die über zumindest eine Schaltwelle (41, 42) betätigbare Messergruppe um eine Achse (30) schwenkbar und in Eingriffsstellung in einen Förderkanal (26) der Erntemaschine (1) überführbar ausgebildet ist, **dadurch gekennzeichnet, daß** der Messergruppe zur Überführung in ihre Eingriffstellung und/oder Außereingriffsstellung eine Stellvorrichtung (28) zugeordnet ist.

2. Erntemaschine nach Anspruch 1 mit zumindest einer weiteren Messergruppe, **dadurch gekennzeichnet, daß** der weiteren Messergruppe zur Überführung in ihre Eingriffs-und/oder Außereingriffstellung eine Stellvorrichtung (28) zugeordnet ist.

3. Erntemaschine nach Anspruch 2 mit zumindest zwei Messergruppen, **dadurch gekennzeichnet, daß** den Messergruppen eine gemeinsame Stellvorrichtung (28) zugeordnet ist.

4. Erntemaschine nach Anspruch 2 oder 3, wobei die Messergruppen zumindest teilweise einer um eine gemeinsame Achse (30) verschwenkbaren Messerreihe zugeordnet sind, **gekennzeichnet durch** eine der Messerreihe zugeordnete Stellvorrichtung (28).

5. Erntemaschine nach Anspruch 4 mit zumindest zwei Messergruppen aufweisenden Messerreihen, **dadurch gekennzeichnet, daß** den Messerreihen eine gemeinsame Stellvorrichtung (28) zugeordnet ist.

6. Erntemaschine nach einem der Ansprüche 2 bis 5, **dadurch gekennzeichnet, daß** die Messerreihen und/oder Messergruppen unabhängig voneinander durch die Stellvorrichtung (28) bewegbar sind.

7. Erntemaschine nach einem der Ansprüche 1 bis 6, **dadurch gekennzeichnet, daß** die Stellvorrichtung (28) zumindest ein Stellmittel (34) aufweist, welches formschlüssig mit Schaltwellen (41, 42) der Messergruppen bewegbar ist.

8. Erntemaschine nach Anspruch 7, **dadurch gekennzeichnet, daß** das Stellmittel (34) ein Zylinder ist.

9. Erntemaschine nach einem der Ansprüche 7 oder 8, **dadurch gekennzeichnet, daß** die Stellvorrichtung (28) eine Zahnstange (37) und zumindest zwei mit dieser Zahnstange (37) in Eingriff überführbare Zahnräder (38, 39), welche jeweils einer Schaltwelle (41, 42) zugehörig sind, aufweist.

10. Erntemaschine nach Anspruch 9, **dadurch gekennzeichnet, daß** die Zahnräder (38, 39) der Stellvorrichtung (28) mittels eines Stellmittels (34) mit der Zahnstange (37) in Eingriff überführbar sind.

11. Erntemaschine nach einem der Ansprüche 7 bis 10, **dadurch gekennzeichnet, daß** die Stellvorrichtung (28) Feststellmittel zur Fixierung der Schaltwellen (41, 42) in einer einstellbaren Stellung aufweist.

12. Erntemaschine nach einem der Ansprüche 1 bis 11, **dadurch gekennzeichnet, daß** die Stellvorrichtung (28) einen Druckspeicher (44) für den Betrieb aufweist.

13. Erntemaschine nach einem der Ansprüche 1 bis 12, **dadurch gekennzeichnet, daß** die Stellvorrichtung (28) zur Verstellung der Messergruppen von einer Steuervorrichtung aus betätigbar ist.

14. Erntemaschine nach einem der Ansprüche 1 bis 13, **dadurch gekennzeichnet, daß** die von der Stellvorrichtung (28) bewegten Messerreihen durch Schlitze in einem zumindest zweigeteilten Förderkanalboden in den Förderkanal (26) führbar sind.

15. Erntemaschine nach Anspruch 14, **dadurch gekennzeichnet, daß** die zumindest zwei Teile des Förderkanalbodens zur Vergrößerung des Förderkanals (26) in einer Reinigungsstellung jeweils um Schwenkachsen bewegbar sind.
